# EUROPEAN PATENT SPECIFICATION

(11) **EP 3 667 152 B1**
(45) Date of publication and mention of the grant of the patent: **04.10.2023**
(21) Application number: 18858670.5
(22) Date of filing: 01.06.2018
(51) Int. Cl.: F17C 1/16, F17C 13/00, B29C 45/16

(54) **HIGH-PRESSURE VESSEL AND MANUFACTURING METHOD THEREOF**
HOCHDRUCKBEHÄLTER UND HERSTELLUNGSVERFAHREN DAFÜR
RÉCIPIENT HAUTE PRESSION ET PROCÉDÉ POUR SA FABRICATION

(30) Priority: 21.09.2017 KR 20170121796
(43) Date of publication of application: 17.06.2020
(73) Proprietor: Dong Hee Industrial Co., Ltd., Ulsan 44784 (KR); Ace Chemical Co.,Ltd., Hwaseong-si, Gyeonggi-do 18523 (KR)
(72) Inventor: KYE, Tae Hong, Suwon-si Gyeonggi-do 16324 (KR); PARK, Kyun Bum, Hwaseong-si Gyeonggi-do 18429 (KR); CHO, Hyung Joo, Gwangmyeong-si Gyeonggi-do 14221 (KR); KIM, Heung Tae, Suwon-si Gyeonggi-do 16688 (KR)
(74) Representative: Isarpatent
(86) International application number: PCT/KR2018/006309
(87) International publication number: WO 2019/059495

(56) References cited:
- WO-A1-2013/083162
- WO-A1-2015/084170
- FR-A1- 3 025 584
- FR-A1- 3 037 633
- JP-A- H01 299 400
- JP-A- 2000 266 289
- JP-A- 2013 108 521
- KR-A- 20130 032 186
- KR-A- 20130 032 186
- KR-A- 20130 090 876
- KR-A- 20170 105 089
- KR-B1- 100 916 020
- US-A- 5 476 189
- US-A1- 2011 309 074
- US-A1- 2012 217 251
- US-A1- 2014 014 667
- US-A1- 2018 238 491
- US-A1- 2020 158 286
- US-B1- 8 297 468

## Description

### Technical Field

The present invention relates to a high-pressure vessel and a manufacturing method thereof. More particularly, the present invention relates to a high-pressure vessel capable of safely storing high-pressure gas, such as a fuel tank of a natural gas vehicle or a hydrogen tank of a fuel cell vehicle, and a manufacturing method thereof.

### Background Art

A natural gas (CNG) vehicle or a hydrogen fuel cell vehicle is equipped with a high-pressure vessel to compress gaseous fuel at high pressure and thereby store the gaseous fuel.

Generally, the high-pressure vessel is manufactured through the following manufacturing process: a liner is made of synthetic resin to reduce weight, a composite material such as carbon fiber is wound thereon, a protective pad is attached thereon again to absorb shocks on an outer surface and thereby prevent damage to liner, and glass fiber is wound again thereon to prevent the removal of the protective pad and prevent chipping. When winding, the glass fiber is wetted with polymer resin (epoxy) and then wound. Finally, a fire-resisting material spray is applied thereon.

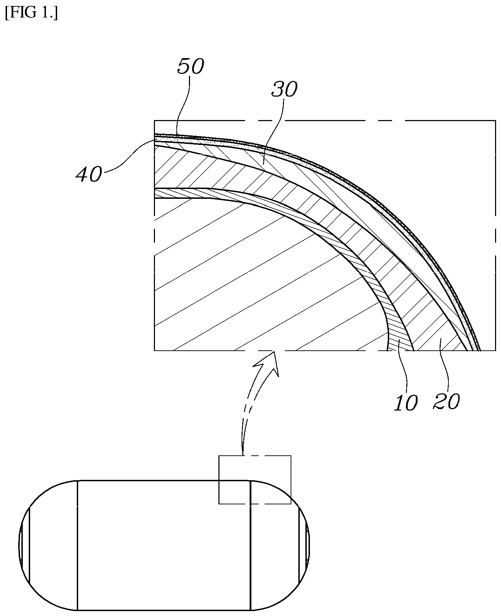

FIG. 1 illustrates the structure of a conventional high-pressure vessel.

To be more specific, referring to FIG. 1, the high-pressure vessel includes a liner 10 including a cylinder and dome-shaped spaces provided on both ends of the cylinder and storing a high-pressure fluid therein, and a composite material 20 provided an outer surface of the liner.

Furthermore, the vessel further includes on an outer surface of the composite material 20 a protective-pad layer 30 to protect the high-pressure vessel, a glass fiber layer 40, and a fire-resisting material layer 50. The protective-pad layer 30 serves to protect the liner from shocks of the outer surface, and the glass fiber layer 40 serves to secure the protective pad and prevent chipping. Furthermore, the fire-resisting material layer 50 of the outer surface serves to provide fire resistance in the event of fire.

However, since the composite material 20 on the outer surface of the liner 10 is not uniform in surface shape, there is a problem that an edge portion thereof is thinnest when winding. Thus, when the protective-pad layer 30 is attached to the surface, the surface of the composite material 20 is not uniform, so that adhesive strength is not sufficiently ensured.

Furthermore, the glass fiber layer 40 is manufactured through a manufacturing process for winding glass fiber (e.g. filament), and time and cost required for winding are large, so that production efficiency may be undesirably deteriorated.

In addition, the fire-resisting material layer 50 is made by applying spray containing fire-resisting ingredients. However, it is very complicated to apply the spray in a uniform application amount. Further, when the outer surface is subjected to shocks, the applied fire-resisting material may be lost, so that the fire resistance may be lost.

That is, time and cost required for the process of manufacturing the high-pressure vessel are undesirably large according to respective sequential processes, and it is difficult to obtain a uniform quality despite the large manufacturing process and time.

The description provided above as a related art of the present disclosure is just for helping understanding the background of the present disclosure and should not be construed as being included in the related art known by those skilled in the art.

As the related art, KR 10-1161229 B has been proposed.

FR 3 025 584 A1 discloses a composite gas conditioning container comprising a cylindrical hollow body defining an internal volume for receiving gas, a filamentary winding wound around said cylindrical hollow body, and a plurality of envelopes superimposed on one another.

### Disclosure

### Technical Problem

The present invention has been made to solve the above-mentioned problems and difficulties and relates to a high-pressure vessel having shock resistance, heat resistance, and chipping resistance, and a method of manufacturing a high-pressure vessel that simplifies a manufacturing process and increases production efficiency.

### Technical Solution

In order to accomplish the above object, the present invention provides a high-pressure vessel, including: a liner including a cylinder portion and dome portions disposed at both ends of the cylinder portion, and storing a high-pressure fluid therein, each of the dome portions having a dome shape; a composite material layer surrounding an outer surface of the liner; and a protective layer surrounding an outer surface of the composite material layer and including a shock-absorbing layer, a heat-resistant layer, and a surface protective layer, which are sequentially laminated, wherein the shock-absorbing layer of the protective layer is made of a resin material, and is formed by an injection molding method or a foaming method on an inner surface of the heat-resistant layer.

The surface protective layer of the protective layer is made of a resin material, and is formed on an outer surface of the heat-resistant layer through injection molding or thermoforming.

The protective layer may include a cylinder protecting portion to protect the cylinder portion and a dome protecting portion to protect the dome portion, thus surrounding an outer surface of the composite material layer.

The shock-absorbing layer may contain a urethane material.

The heat-resistant layer contains a ceramic material.

The surface protective layer may contain a Polyethylene Terephthalate (PET) material or a Low Weight Reinforced Thermoplastic (LWRT) material.

The LWRT material of the surface protective layer may be reinforced with Glass Fiber (GF).

In order to accomplish the above object, the present invention provides a method of manufacturing a high-pressure vessel according to the invention, the method including: coupling a composite material layer with a protective layer by attaching the protective layer to an outer surface of the composite material layer or by forming a shock-absorbing layer between the outer surface of the composite material layer and an inner surface of the heat-resistant layer through injection molding or foaming.

The method may further include forming the surface protective layer on an outer surface of the heat-resistant layer through injection molding or thermoforming, before the coupling the composite material layer with the protective layer.

The surface protective layer may be formed through injection molding or thermoforming to cover a side surface of the heat-resistant layer, at the forming the surface protective layer on the outer surface of the heat-resistant layer through injection molding or thermoforming.

The protective layer may include a cylinder protecting portion to protect a cylinder portion and a dome protecting portion to protect a dome portion, and at the coupling the composite material layer with the protective layer, the cylinder protecting portion may attach the protective layer to the outer surface of the composite material layer, and the dome protecting portion may couple the composite material layer with the protective layer by forming the shock-absorbing layer between the outer surface of the composite material layer and the heat-resistant layer through injection molding or foaming.

At the coupling of the composite material layer with the protective layer, the shock-absorbing layer may be formed through injection molding or foaming to fill a gap between the cylinder protecting portion and the dome protecting portion.

The protective layer composed of the shock-absorbing layer and the heat-resistant layer may include a cylinder protecting portion to protect a cylinder portion and a dome protecting portion to protect a dome portion, and at the coupling the composite material layer with the protective layer, the cylinder protecting portion and the dome protecting portion may couple the composite material layer with the protective layer by integrally forming the shock-absorbing layer between the outer surface of the composite material layer and the heat-resistant layer through injection molding or foaming.

### Advantageous Effects

A high-pressure vessel and a manufacturing method thereof according to the present invention are advantageous in that a protective layer is completed in a single process, so that the manufacturing process is simplified, and thereby manufacturing cost and time are reduced and production efficiency is increased.

Furthermore, the shock resistance, the heat resistance, and the chipping resistance of a high-pressure vessel are guaranteed, so that the safety of the high-pressure vessel is ensured, and quality deviation is reduced.

Moreover, the invention has effects of solving a problem wherein a fire-resisting material is lost by shocks acting on an outer surface, so that fire resistance is lost.

### Description of Drawings

FIG. 1 illustrates a structure of a conventional high-pressure vessel.
FIG. 2 illustrates a high-pressure vessel and a protective layer according to an embodiment of the present invention.
FIG. 3 illustrates a protective-layer coupling structure of the high-pressure vessel according to the embodiment of the present invention.
FIG. 4 illustrates a flowchart of a method of manufacturing a high-pressure vessel according to an embodiment of the present invention.
FIGS. 5 to 7 illustrate an interface of a protective layer of the high-pressure vessel according to the embodiment of the present invention.

### Mode for Invention

Specific structural or functional descriptions in the embodiments of the present disclosure introduced in this specification or application are only for description of the embodiments of the present disclosure. The descriptions should not be construed as being limited to the embodiments described in the specification or application.

Since the present disclosure may be embodied in many different forms, specific embodiments are illustrated in the drawings and described in detail herein. However, it is to be understood that the present description is not intended to limit the present disclosure to those exemplary embodiments, and the present disclosure is intended to cover not only the exemplary embodiments, but also various alternatives, modifications, equivalents, and other embodiments that fall within the scope of the appended claims.

It will be understood that, although the terms "first", "second", etc. may be used herein to describe various elements, these elements should not be limited by these terms. These terms are only used to distinguish one element from another element. For instance, a first element discussed below could be termed a second element without departing from the teachings of the present disclosure. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between", "directly between", "adjacent to", or "directly adjacent to" should be construed in the same way.

The terminology used herein is for the purpose of describing particular embodiments only and is not intended to be limiting. In the present disclosure, the singular forms are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Unless otherwise defined, all terms including technical and scientific terms used herein have the same meaning as commonly understood by one of ordinary skill in the art to which the present disclosure belongs. Terms used herein should be interpreted as having a meaning that is consistent with their meaning in the context of this specification and the relevant art and will not be interpreted in an idealized or overly formal sense unless expressly defined herein.

Hereinafter, the present disclosure will be explained in detail by describing exemplary embodiments of the present disclosure with reference to the accompanying drawings. The same reference numerals are used throughout the drawings to designate the same or similar components.

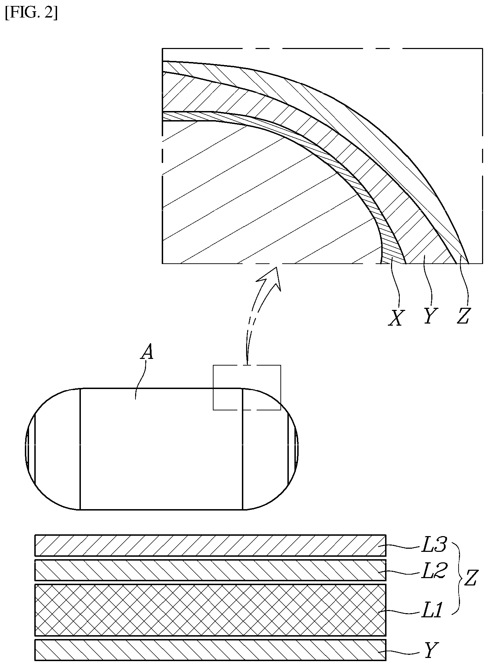

FIG. 2 illustrates a high-pressure vessel and a protective layer according to an embodiment of the present invention.

Referring to FIG. 2, the high-pressure vessel A according to the embodiment of the present invention includes a liner X including a cylinder portion and dome portions disposed at both ends of the cylinder portion, and storing a high-pressure fluid therein, each of the dome portions having a dome shape, a composite material layer Y surrounding an outer surface of the liner X, and a protective layer Z surrounding an outer surface of the composite material layer Y and including a shock-absorbing layer L1, a heat-resistant layer L2, and a surface protective layer L3, which are sequentially laminated. The shock-absorbing layer L1 of the protective layer Z is made of a resin material, and is formed by an injection molding method or a foaming method on an inner surface of the heat-resistant layer L2.

The liner X storing the high-pressure fluid therein may be formed of a plastic material such as Polyamide 6 (PA6) or Polyethylene (PE). As shown in the drawings, the liner may be shaped to have the cylinder portion and the dome portions disposed at both ends of the cylinder portion, each dome portion having the dome shape. The liner X may have a space to store the high-pressure fluid such as the high-pressure gas therein.

The composite material layer Y may be formed to surround the outer surface of the liner X. The composite material layer Y may be formed of a material obtained by mixing Carbon Fiber (CF) or Glass Fiber (GF) with resin.

The composite material layer Y may be made by winding composite fiber. In this case, due to the properties of a winding method, as shown in the drawings, an edge portion between the cylinder portion and the dome portion may be thinnest. Therefore, in order to prevent the edge portion from being vulnerable to shocks or heat, the protective layer Z may be formed thicker at the edge portion. Particularly, the shock-absorbing layer L1 may be formed thicker at the edge portion.

In other words, a flat portion such as the cylinder portion forms a uniform layer while the composite material layer Y and the protective layer Z each having a thickness. However, in the case of the edge portion transferred to the dome portion, the composite material layer Y is thinner than the cylinder portion. Hence, the protective layer Z is formed thicker than the cylinder portion, thus compensating for the composite material layer Y that is reduced in thickness.

The protective layer Z may surround the outer surface of the composite material layer Y, and may sequentially laminate the shock-absorbing layer L1, the heat-resistant layer L2, and the surface protective layer L3 on the outer surface of the composite material layer Y.

The shock-absorbing layer L1 may be made of the resin material, and may be formed by the injection molding method or the foaming method on the inner surface of the heat-resistant layer L2. To be more specific, the shock-absorbing layer L1 may be formed on the inner surface of the heat-resistant layer L2 through injection molding and then attached to the outer surface of the composite material layer Y, or may be directly formed through injection molding between the heat-resistant layer L2 and the outer surface of the composite material layer Y. The shock-absorbing layer L1 may contain a urethane material. That is, the shock-absorbing layer L1 may be made by inserting the heat-resistant layer L2 of the ceramic material into a mold and then performing injecting molding or foaming on the inner surface of the heat-resistant layer L2, or by inserting the high-pressure vessel to which the liner 10 and the composite material layer Y are applied, and the heat-resistant layer L2 into a mold and then performing injecting molding or foaming therebetween.

Meanwhile, the heat-resistant layer L2 may contain a ceramic material.

The surface protective layer L3 may contain a Polyethylene Terephthalate (PET) material or a Low Weight Reinforced Thermoplastic (LWRT) material. The LWRT material of the surface protective layer L3 may be reinforced through Glass Fiber (GF). The surface protective layer L3 may be formed on the outer surface of the heat-resistant layer L2 through injection molding or thermoforming with the heat-resistant layer L2 being inserted.

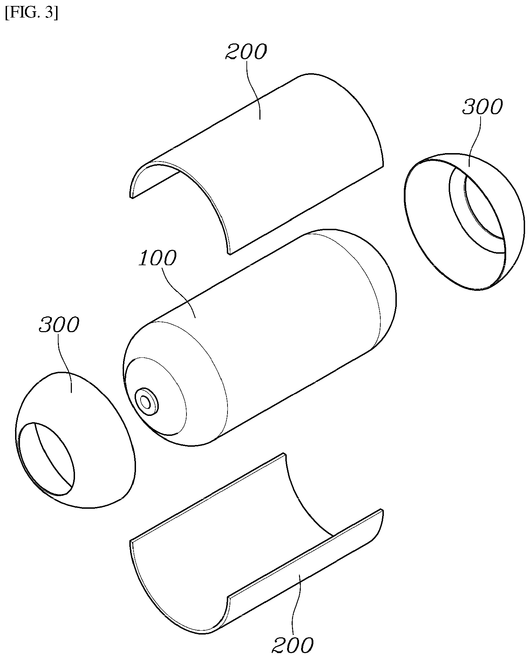

FIG. 3 illustrates a protective-layer coupling structure of the high-pressure vessel according to the embodiment of the present invention.

Referring to FIG. 3, protective layers 200 and 300 of the high-pressure vessel according to the present invention may be coupled to surround the outer surface of the composite material layer 100 that surrounds the outer surface of the liner (not shown). Particularly, the protective layers 200 and 300 may include a cylinder protecting portion 200 that protects a cylinder portion, and a dome protecting portion 300 that protects a dome portion, thus surrounding the outer surface of the composite material layer.

The cylinder protecting portion 200 surrounds the cylinder portion to protect the cylinder portion of the high-pressure vessel, and may be formed to have an integrated structure. However, as shown in the drawings, the cylinder protecting portion may be composed of a plurality of portions and then coupled to the outer surface of the composite material layer 100.

The dome protecting portion 300 surrounds the dome portion so as to protect the dome portion of the high-pressure vessel, and is formed on each of both ends of the cylinder portion to be coupled to the outer surface of the composite material layer 100.

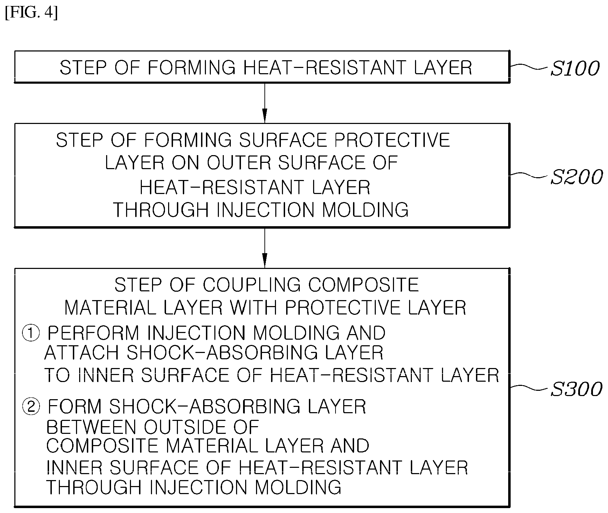

FIG. 4 illustrates a flowchart of a method of manufacturing a high-pressure vessel according to an embodiment of the present invention.

Referring to FIG. 4, the method of manufacturing the high-pressure vessel according to the embodiment of the present invention includes a step S300 of coupling the composite material layer Y with the protective layer Z by attaching the protective layer Z to the outer surface of the composite material layer Y or by forming the shock-absorbing layer L1 between the outer surface of the composite material layer Y and the heat-resistant layer L2 through injection molding or foaming.

Before the step S300 of coupling the composite material layer Y with the protective layer Z, the method may further include a step S200 of forming the surface protective layer L3 on the outer surface of the heat-resistant layer L2 through injection molding or thermoforming.

That is, the heat-resistant layer L2 may be first formed at step S100, and the surface protective layer L3 may be formed on the outer surface thereof at step S200. The surface protective layer L3 may be formed on the outer surface of the heat-resistant layer L2 through injection molding or thermoforming. Subsequently, the shock-absorbing layer L1 may be formed on the inner surface of the heat-resistant layer L2 through injection molding or thermoforming to be attached to the outer surface of the composite material layer Y, or the shock-absorbing layer L1 may be directly formed through injection molding or thermoforming on the outer surface of the composite material layer Y at step S300.

According to an embodiment, the step S300 of coupling the composite material layer Y with the protective layer Z may be performed by forming the shock-absorbing layer L1 on the inner surface of the heat-resistant layer L2 through injection molding or foaming to form the protective layer Z and then attaching the protective layer to the outer surface of the composite material layer Y, which surrounds the outer surface of the liner (not shown), using an adhesive. This may be suitable for coupling the cylinder protecting portion that protects the cylinder portion to the outer surface of the composite material layer Y. In the case of the cylinder portion, it is easy to have a relatively flat surface when winding the composite material layer Y. Thus, required bonding strength between the composite material layer Y and the shock-absorbing layer L1 may be obtained merely by attaching without insert injection.

According to another embodiment, the step S300 of coupling the composite material layer Y with the protective layer Z may be performed by placing the heat-resistant layer L2 and the surface protective layer L3 on the outer surface thereof on the outer surface of the composite material layer Y, and forming the shock-absorbing layer L1 of the resin material through injection molding or foaming between the outer surface of the composite material layer Y and the heat-resistant layer L2. This may be suitable for coupling the dome protecting portion that protects the dome portion to the outer surface of the composite material layer Y. In contrast, since the dome portion has curvature and there is a limit in forming precise curvature when winding the composite material layer Y, it may be difficult to obtain required strength merely by adhesion. Therefore, this is easy to obtain required bonding strength through insert injection.

The protective layer Z may include the cylinder protecting portion to protect the cylinder portion, and the dome protecting portion to protect the dome portion. At the step of coupling the composite material layer Y with the protective layer Z, the cylinder protecting portion may attach the protective layer Z to the outer surface of the composite material layer Y, and the dome protecting portion may form the shock-absorbing layer L1 through injection molding or foaming between the outer surface of the composite material layer Y and the heat-resistant layer L2, thus coupling the composite material layer Y with the protective layer Z.

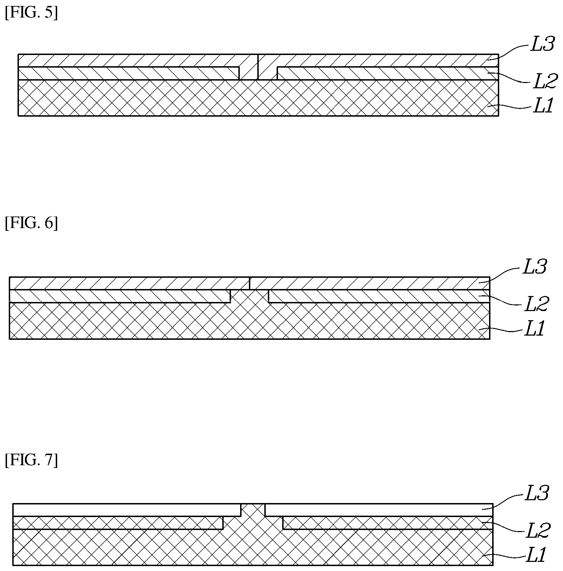

FIGS. 5 to 7 illustrate an interface of a protective layer of the high-pressure vessel according to the embodiment of the present invention.

Referring to FIG. 5, according to an embodiment, at the step S200 of forming the surface protective layer L3 on the outer surface of the heat-resistant layer L2 through injection molding or thermoforming, the surface protective layer L3 may be formed through injection molding or thermoforming to cover the side surface of the heat-resistant layer L2.

Referring to FIGS. 6 and 7, according to another embodiment, at the step S300 of coupling the composite material layer Y with the protective layer Z, the shock-absorbing layer L1 may be formed through injection molding or foaming to fill a gap between the cylinder protecting portion and the dome protecting portion.

To be more specific, the heat-resistant layer L2 containing a ceramic material is excellent in heat insulating performance and heat resistance but is vulnerable to moisture. Therefore, the heat-resistant layer L2 is preferably surrounded by the shock-absorbing layer L1 and the surface protective layer L3 so as not to be exposed to the outside.

Therefore, as shown in FIG. 5, at the step S200 of forming the surface protective layer L3 on the outer surface of the heat-resistant layer L2 through injection molding or thermoforming, the surface protective layer L3 may be formed through injection molding or thermoforming to cover the side surface of the heat-resistant layer L2, or as shown in FIG. 6, at the step S300 of coupling the composite material layer Y with the protective layer Z, the shock-absorbing layer L1 may be formed through injection molding or foaming to cover the side surface of the heat-resistant layer L2. Thereby, the heat-resistant layer L2 is not exposed to moisture, and is able to sufficiently exhibit heat-resistant effects.

Furthermore, as described above, the protective layer Z may include the cylinder protecting portion to protect the cylinder portion, and the dome protecting portion to protect the dome portion. At the step of coupling the composite material layer Y with the protective layer Z, the cylinder protecting portion may attach the protective layer Z to the outer surface of the composite material layer Y, and the dome protecting portion may form the shock-absorbing layer L1 through injection molding or foaming between the outer surface of the composite material layer Y and the heat-resistant layer L2, thus coupling the composite material layer Y with the protective layer Z. In this case, after the cylinder protecting portion is first attached to the outer surface of the composite material layer Y, the dome protecting portion may be coupled to the outer surface of the composite material layer Y by forming the shock-absorbing layer L1 through injection molding or foaming.

This is because the gap may occur in the process of forming each of a plurality of cylinder protecting portions and dome protecting portions and then coupling the portions to the outer surface of the composite material layer Y, and thus the gap may be filled with the shock-absorbing layer L1 by finally forming the shock-absorbing layer L1 through injection molding or foaming.

To be more specific, as shown in FIG. 6, the gap between the cylinder protecting portions may be filled by forming so that there is no gap between surface protective layers L3, and then forming the shock-absorbing layer L1 through injection molding or foaming in the gap between heat-resistant layers L2.

The gap between the cylinder protecting portion and the dome protecting portion may be filled by forming the shock-absorbing layer L1 through injection molding or foaming in the gap between the surface protective layer L3 and the heat-resistant layer L2, as shown in FIG. 7.

According to another embodiment, turning back to FIG. 3, the protective layers 200 and 300 composed of the heat-resistant layer and the surface protective layer may include the cylinder protecting portion 200 that protects the cylinder portion, and the dome protecting portion 300 that protects the dome portion. At the step S300 of coupling the composite material layer with the protective layer, the cylinder protecting portion 200 and the dome protecting portion 300 may integrally form the shock-absorbing layer through injection molding or foaming between the outer surface of the composite material layer 100 and the heat-resistant layer, thus coupling the composite material layer 100 with the protective layers 200 and 300.

That is, the shock-absorbing layer may be integrally formed through injection molding or foaming between the inner surfaces of the protective layers 200 and 300 composed of the heat-resistant layer and the surface protective layer and the outer surface of the composite material layer 100, thus coupling the cylinder protecting portion 200 and the dome protecting portion 300 to the outer surface of the composite material layer 100.

While the present invention has been particularly described with reference to exemplary embodiments shown in the drawings, it will be understood by those of ordinary skill in the art that the exemplary embodiments have been described for illustrative purposes, and various changes and modifications may be made without departing from the scope of the present invention as defined by the appended claims.

### [Description of reference numerals of important parts]

10: liner 20: composite material layer
30: protective-pad layer 40: glass fiber layer
50: fire-resisting material layer
A: high-pressure vessel X: liner
Y: composite material layer Z: protective layer
L1: shock-absorbing layer L2: heat-resistant layer
L3: surface protective layer

## Claims

1. A high-pressure vessel, comprising:
a liner (X) including a cylinder portion and dome portions disposed at both ends of the cylinder portion, and storing a high-pressure fluid therein, each of the dome portions having a dome shape;
a composite material layer (Y, 100) surrounding an outer surface of the liner (X); and
a protective layer (Z, 200, 300) surrounding an outer surface of the composite material layer (Y, 100) and including a shock-absorbing layer (L1), a heat-resistant layer (L2), and a surface protective layer (L3), which are sequentially laminated,
**characterized in that** the shock-absorbing layer (L1) of the protective layer (Z, 200, 300) is made of a resin material, and is formed by an injection molding method or a foaming method on an inner surface of the heat-resistant layer (L2),
wherein the surface protective layer (L3) of the protective layer (Z, 200, 300) is made of a resin material, and is formed on an outer surface of the heat-resistant layer (L2) through injection molding or thermoforming, and
wherein the heat-resistant layer (L2) contains a ceramic material.

2. The high-pressure vessel of claim 1, wherein the protective layer comprises a cylinder protecting portion (200) to protect the cylinder portion and a dome protecting portion (300) to protect the dome portion, thus surrounding an outer surface of the composite material layer.

3. The high-pressure vessel of claim 1, wherein the shock-absorbing layer contains a urethane material.

4. The high-pressure vessel of claim 1, wherein the surface protective layer contains a Polyethylene Terephthalate (PET) material or a Low Weight Reinforced Thermoplastic (LWRT) material.

5. The high-pressure vessel of claim 4, wherein the LWRT material of the surface protective layer is reinforced with Glass Fiber (GF).

6. A method of manufacturing a high-pressure vessel of claim 1, comprising:
coupling (S300) a composite material layer with a protective layer by attaching the protective layer to an outer surface of the composite material layer or by forming a shock-absorbing layer between the outer surface of the composite material layer and an inner surface of the heat-resistant layer through injection molding or foaming.

7. The method of claim 6, further comprising:
forming (S200) the surface protective layer on an outer surface of the heat-resistant layer through injection molding or thermoforming, before the coupling the composite material layer with the protective layer.

8. The method of claim 7, wherein the surface protective layer is formed through injection molding or thermoforming to cover a side surface of the heat-resistant layer, at the forming the surface protective layer on the outer surface of the heat-resistant layer through injection molding or thermoforming.

9. The method of claim 6, wherein the protective layer comprises a cylinder protecting portion to protect a cylinder portion and a dome protecting portion to protect a dome portion, and at the coupling the composite material layer with the protective layer, the cylinder protecting portion attaches the protective layer to the outer surface of the composite material layer, and the dome protecting portion couples the composite material layer with the protective layer by forming the shock-absorbing layer between the outer surface of the composite material layer and the heat-resistant layer through injection molding or foaming.

10. The method of claim 9, wherein, at the coupling of the composite material layer with the protective layer, the shock-absorbing layer is formed through injection molding or foaming to fill a gap between the cylinder protecting portion and the dome protecting portion.

11. The method of claim 6, wherein the protective layer composed of the shock-absorbing layer and the heat-resistant layer comprises a cylinder protecting portion to protect a cylinder portion and a dome protecting portion to protect a dome portion, and at the coupling the composite material layer with the protective layer, the cylinder protecting portion and the dome protecting portion couple the composite material layer with the protective layer by integrally forming the shock-absorbing layer between the outer surface of the composite material layer and the heat-resistant layer through injection molding or foaming.

## Patentansprüche

1. Hochdruckbehälter, umfassend:
eine Auskleidung (X), die einen zylindrischen Abschnitt und kuppelförmige Abschnitte, die an beiden Enden des zylindrischen Abschnitts angeordnet sind, aufweist und in der ein Hochdruckfluid gespeichert wird, wobei jeder der kuppelförmigen Abschnitte eine Kuppelform aufweist;
eine Verbundmaterialschicht (Y, 100), die eine Außenfläche der Auskleidung (X) umgibt; und
eine Schutzschicht (Z, 200, 300), die eine Außenfläche der Verbundmaterialschicht (Y, 100) umgibt und eine stoßdämpfende Schicht (L1), eine hitzebeständige Schicht (L2) und eine Oberflächenschutzschicht (L3) umfasst, die nacheinander laminiert sind,
**dadurch gekennzeichnet, dass** die stoßdämpfende Schicht (L1) der Schutzschicht (Z, 200, 300) aus einem Harzmaterial hergestellt ist und durch ein Spritzgussverfahren oder ein Aufschäumverfahren an einer Innenfläche der hitzebeständigen Schicht (L2) gebildet ist,
wobei die Oberflächenschutzschicht (L3) der Schutzschicht (Z, 200, 300) aus einem Harzmaterial hergestellt ist und auf einer Außenfläche der hitzebeständigen Schicht (L2) durch Spritzgießen oder Thermoformen gebildet ist und
wobei die hitzebeständige Schicht (L2) ein keramisches Material umfasst.

2. Hochdruckbehälter nach Anspruch 1, wobei die Schutzschicht einen Zylinderschutzabschnitt (200) zum Schutz des Zylinderabschnitts und einen Kuppelschutzabschnitt (300) zum Schutz des Kuppelabschnitts umfasst, wodurch eine Außenfläche der Verbundmaterialschicht umgeben ist.

3. Hochdruckbehälter nach Anspruch 1, wobei die stoßdämpfende Schicht ein Urethanmaterial umfasst.

4. Hochdruckbehälter nach Anspruch 1, wobei die Oberflächenschutzschicht ein Polyethylenterephthalat (PET)-Material oder ein verstärktes Thermoplastmaterial von geringem Gewicht (Low Weight Reinforced Thermoplastic, LWRT) umfasst.

5. Hochdruckbehälter nach Anspruch 4, wobei das LWRT-Material der Oberflächenschutzschicht mit Glasfasern (GF) verstärkt ist.

6. Verfahren zur Herstellung eines Hochdruckbehälters nach Anspruch 1, umfassend:
Koppeln (S300) einer Verbundmaterialschicht mit einer Schutzschicht durch Anbringen der Schutzschicht an einer Außenfläche der Verbundmaterialschicht oder durch Bilden einer stoßdämpfenden Schicht zwischen der Außenfläche der Verbundmaterialschicht und einer Innenfläche der hitzebeständigen Schicht durch Spritzgießen oder Aufschäumen.

7. Verfahren nach Anspruch 6, des Weiteren umfasst:
Bilden (S200) der Oberflächenschutzschicht an einer Außenfläche der hitzebeständigen Schicht durch Spritzgießen oder Thermoformen vor dem Koppeln der Verbundmaterialschicht mit der Schutzschicht.

8. Verfahren nach Anspruch 7, wobei die
Oberflächenschutzschicht durch Spritzgießen oder Thermoformen zum Bedecken einer Seitenfläche der hitzebeständigen Schicht beim Bilden der
Oberflächenschutzschicht an der Außenfläche der hitzebeständigen Schicht durch Spritzgießen oder Thermoformen gebildet wird.

9. Verfahren nach Anspruch 6, wobei die Schutzschicht einen Zylinderschutzabschnitt zum Schutz eines Zylinderabschnitts und einen Kuppelschutzabschnitt zum Schutz eines Kuppelabschnitts umfasst, und der Zylinderschutzabschnitt, beim Koppeln der Verbundmaterialschicht mit der Schutzschicht, die Schutzschicht an der Außenfläche der
Verbundmaterialschicht anbringt und der Kuppelschutzabschnitt die Verbundmaterialschicht mit der Schutzschicht koppelt, indem die stoßdämpfende Schicht zwischen der Außenfläche der Verbundmaterialschicht und der hitzebeständigen Schicht durch Spritzgießen oder Aufschäumen gebildet wird.

10. Verfahren nach Anspruch 9, wobei die stoßdämpfende Schicht, beim Koppeln der Verbundmaterialschicht mit der Schutzschicht, durch Spritzgießen oder Aufschäumen so gebildet wird, dass ein Spalt zwischen dem Zylinderschutzabschnitt und dem Kuppelschutzabschnitt gefüllt wird.

11. Verfahren nach Anspruch 6, wobei die aus der stoßdämpfenden Schicht und der hitzebeständigen Schicht zusammengesetzte Schutzschicht einen Zylinderschutzabschnitt zum Schutz eines Zylinderabschnitts und einen Kuppelschutzabschnitt zum Schutz eines Kuppelabschnitts umfasst, und der Zylinderschutzabschnitt und der Kuppelschutzabschnitt, beim Koppeln der Verbundmaterialschicht mit der Schutzschicht, die Verbundmaterialschicht mit der Schutzschicht koppeln, indem die stoßdämpfende Schicht integral zwischen der Außenfläche der Verbundmaterialschicht und der hitzebeständigen Schicht durch Spritzgießen oder Aufschäumen gebildet wird.

## Revendications

1. Récipient sous haute pression, comprenant :
un chemisage (X) incluant une partie de cylindre et des parties de dôme disposées aux deux extrémités de la partie de cylindre, et stockant un fluide sous haute pression dans celui-ci, chacune des parties de dôme ayant une forme de dôme ;
une couche de matériau composite (Y, 100) entourant une surface extérieure du chemisage (X) ; et
une couche de protection (Z, 200, 300) entourant une surface extérieure de la couche de matériau composite (Y, 100) et incluant une couche d'absorption de chocs (L1), une couche de résistance à la chaleur (L2) et une couche de protection de surface (L3), qui sont stratifiées de manière séquentielle,
**caractérisé en ce que** la couche d'absorption de chocs (L1) de la couche de protection (Z, 200, 300) est constituée d'un matériau en résine, et est formée par un procédé de moulage par injection ou un procédé de moussage sur une surface intérieure de la couche de résistance à la chaleur (L2),
dans lequel la couche de protection de surface (L3) de la couche de protection (Z, 200, 300) est constituée d'un matériau en résine, et est formée sur une surface extérieure de la couche de résistance à la chaleur (L2) par un moulage par injection ou un thermoformage, et
dans lequel la couche de résistance à la chaleur (L2) contient une céramique.

2. Récipient sous haute pression selon la revendication 1, dans lequel la couche de protection comprend une partie de protection de cylindre (200) pour protéger la partie de cylindre et une partie de protection de dôme (300) pour protéger la partie de dôme, en entourant ainsi une surface extérieure de la couche de matériau composite.

3. Récipient sous haute pression selon la revendication 1, dans lequel la couche d'absorption de chocs contient un uréthanne.

4. Récipient sous haute pression selon la revendication 1, dans lequel la couche de protection de surface contient un polyéthylène téréphtalate (PET) ou une matière thermoplastique renforcée à faible masse (LWRT).

5. Récipient sous haute pression selon la revendication 4, dans lequel le matériau LWRT de la couche de protection de surface est renforcé par une fibre de verre (GF).

6. Procédé de fabrication d'un récipient sous haut pression selon la revendication 1, comprenant de :
coupler (S300) une couche de matériau composite avec une couche de protection en fixant la couche de protection sur une surface extérieure de la couche de matériau composite ou en formant une couche d'absorption de chocs entre la surface extérieure de la couche de matériau composite et une surface intérieure de la couche de résistance à la chaleur par un moulage par injection ou un moussage.

7. Procédé selon la revendication 6, comprenant en outre de :
former (S200) la couche de protection de surface sur une surface extérieure de la couche de résistance à la chaleur par un moulage par injection ou un thermoformage, avant le couplage de la couche de matériau composite avec la couche de protection.

8. Procédé selon la revendication 7, dans lequel la couche de protection de surface est formée par un moulage par injection ou un thermoformage pour recouvrir une surface latérale de la couche de résistance à la chaleur, lors de la formation de la couche de protection de surface sur la surface extérieure de la couche de résistance à la chaleur par un moulage par injection ou un thermoformage.

9. Procédé selon la revendication 6, dans lequel la couche de protection comprend une partie de protection de cylindre pour protéger une partie de cylindre et une partie de protection de dôme pour protéger une partie de dôme, et lors du couplage de la couche de matériau composite avec la couche de protection, la partie de protection de cylindre fixe la couche de protection sur la surface extérieure de la couche de matériau composite, et la partie de protection de dôme couple la couche de matériau composite avec la couche de protection en formant la couche d'absorption de chocs entre la surface extérieure de la couche de matériau composite et la couche de résistance à la chaleur par un moulage par injection ou un moussage.

10. Procédé selon la revendication 9, dans lequel, lors du couplage de la couche de matériau composite avec la couche de protection, la couche d'absorption de chocs est formée par un moulage par injection ou un moussage pour combler un espace entre la partie de protection de cylindre et la partie de protection de dôme.

11. Procédé selon la revendication 6, dans lequel la couche de protection composée de la couche d'absorption de chocs et de la couche de résistance à la chaleur comprend une partie de protection de cylindre pour protéger une partie de cylindre et une portion de protection de dôme pour protéger une portion de dôme, et lors du couplage de la couche de matériau composite avec la couche de protection, la portion de protection de cylindre et la portion de protection de dôme couplent la couche de matériau composite avec la couche protectrice en formant d'un seul tenant la couche d'absorption de chocs entre la surface extérieure de la couche de matériau composite et la couche de résistance thermique par un moulage par injection ou un moussage.
